# EUROPÄISCHE PATENTSCHRIFT

(11) **EP 0 920 673 B1**
(45) Veröffentlichungstag und Bekanntmachung des Hinweises auf die Patenterteilung: **17.04.2002**
(21) Anmeldenummer: 97918891.9
(22) Anmeldetag: 21.08.1997
(51) Int. Cl.: G06K 11/18, G06F 3/023

(54) **VERFAHREN UND VORRICHTUNG ZUR EINHÄNDIGEN EINGABE VON DATEN**
METHOD AND DEVICE FOR THE ONE-HANDED INPUT OF DATA
PROCEDE ET DISPOSITIF POUR INTRODUIRE DES DONNEES D'UNE SEULE MAIN

(30) Priorität: 23.08.1996 DE 19634228
(43) Veröffentlichungstag der Anmeldung: 09.06.1999
(73) Patentinhaber: Rein, Wolf Heider, 75180 Pforzheim (DE)
(72) Erfinder: Rein, Wolf Heider, 75180 Pforzheim (DE)
(74) Vertreter: Schuster, Gregor, Dipl.-Ing.
(86) Internationale Anmeldenummer: DE9701808
(87) Internationale Veröffentlichungsnummer: WO9808186

(56) Entgegenhaltungen:
- WO-A-93/21604
- FR-A- 2 654 233
- GB-A- 2 131 746
- US-A- 4 580 006

## Beschreibung

### Stand der Technik

Die Erfindung geht aus von einer Eingabevorrichtung nach der Gattung des Hauptanspruchs und einem Eingabeverfahren nach der Gattung des Nebenanspruchs 5 zur manuellen Eingabe von Informationen für Bildschirmarbeitsplätze.

Bei einer bekannten Eingabevorrichtung bzw. einem bekannten Eingabeverfahren der gattungsgemäßen Art **(GB-A-131746)** können ebenfalls die Tasten nach Wahl für die Eingabe von Koordinaten, alphanumerischen Zeichen oder Steuerbefehlen unterschiedlich belegt sein. Die Mehrfachbelegung wird durch die Erfassung einer quer zur Richtung des Unterarms des Benutzers gegebenen Bewegung erreicht, wobei die jeweilige Fingerspitzenposition auf den Tasten der Eingabevorrichtung als auch die Tastenbetätigung durch eine Einrichtung zum Umsetzen der gegebenen Eingabebewegungen in elektrische Signalfolge von entsprechenden Daten, Schnittstellen erfaßt wird. Zwar wird durch diese bekannte Eingabevorrichtung gegenüber den sonst üblicherweise mit einer Computermaus und einer Tastatur gegebenen

Eingabevorrichtungen auf der Arbeitsfläche direkt vor der bedienenden Person viel Platz gespart, allerdings ohne die dort mögliche Vielfalt der Eingabe von Daten zu erfüllen, wie beispielsweise mehrere Zeigefunktionen nämlich Cursor, Scrollen und Menü.

Die erfindungsgemäße Eingabevorrichtung mit den kennzeichnenden Merkmalen des Hauptanspruchs und das erfindungsgemäße Verfahren mit den Merkmalen des Anspruchs 10 hat demgegenüber den Vorteil, daß die erfindungsgemäße Schwenkbewegung kombiniert mit der Verdrehbewegung und der Verwendung mindestens einer langen Taste wesentlich ökonomischer durchführbar ist als bei bekannten Eingabevorrichtungen und Verfahren, und daß außerdem wesentlich mehr unterschiedliche Daten eingegeben und erfaßt werden können.

Nach einer vorteilhaften Ausgestaltung der Erfindung ist das Gehäuse auf dem Unterteil in Richtung des Unterarms des Benutzers längs verschiebbar, wobei eine solche Längsbewegung nicht nur ökonomisch sondern auch ergonomisch günstig ist.

Nach einer weiteren vorteilhaften Ausgestaltung der Erfindung erfaßt die Eingabevorrichtung als Koordinate mit einer feinen Auflösung die ulnare Schwenkbewegung der Hand, so daß eine seitliche Bewegung der Eingabevorrichtung bei ruhendem Unterarm durchführbar ist.

Nach einer weiteren vorteilhaften Ausgestaltung der Erfindung ist das Gehäuse der Eingabevorrichtung relativ zur Standfläche um eine in Richtung Unterarm laufende Achse drehbar gelagert, wobei eine weitere Ausgestaltung der Erfindung die Pronation durch den Drehwinkel des Gehäuses erfaßt wird, so daß die Hand mit ihrem Gewicht auf der Tastatur ruhen kann ohne daß eine Funktion ausgelöst wird. Die Funktion wird erst durch die Drehung des Gehäuses ausgelöst.

Nach einer weiteren vorteilhaften Ausgestaltung der Erfindung erfolgt die Umsetzung der Eingabebewegungen mit einer von der Betriebsart abhängigen Auflösung, so daß bei manchen Betriebsarten die Eingabe "blind" erfolgen kann.

Nach einer weiteren vorteilhaften diesbezüglichen Ausgestaltung der Erfindung wird die Auflösung bei der Umsetzung der Eingabesignale an die individuellen feinmotorischen Bewegungamplituden der Hand angepaßt, so daß ein an die individuellen Bewegungsgewohnheiten angepaßtes Arbeiten möglich ist.

Nach einer weiteren vorteilhaften Ausgestaltung der Erfindung erzeugt die Umsetzung der Eingabesignale die Koordinatensignale von Anzeigegeräten und die Codesignale von Tastaturen, so daß die Eingabevorrichtung steckerkompatibel mit bekannten Tastaturen und Computermäusen ist.

Nach einer weiteren vorteilhaften Ausgestaltung der Erfindung ist die Eingabevorrichtung symmetrisch aufgebaut und die Tastenbelegung ist auf das Bedienen mit der rechten oder mit der linken Hand einstellbar, so daß nur eine einzige Vorrichtung für Rechts- und Linkshänder erforderlich ist. Zwischen der rechtshändigen und der linkshändigen Betriebsart schaltet man mit der Software um.

Nach einer weiteren vorteilhaften Ausgestaltung der Erfindung erfolgen beim Bewegen der Tasten oder beim Bewegen des Gehäuses haptische Rückmeldungen, die von der momentanen Betriebsart und von der momentanen Tastenbelegung abhängen, so daß die momentane Tastenbelegung und die Betriebsart spürbar sind.

Nach einer vorteilhaften Ausgestaltung des Eingabeverfahrens nach Anspruch 10 erfolgt die Umsetzung von den Tastpunkten des oder der Finger und von den Positionen der Eingabevorrichtung in entsprechende Signalfolgen mit veränderbarer Rasterung, so daß die Bedienung vereinfacht wird.

Nach einer weiteren vorteilhaften Ausgestaltung des Eingabeverfahrens erfolgen beim Bewegen der Eingabevorrichtung haptische Rückmeldungen, die von der momentanen Betriebsart und von der momentanen Tastenbelegung abhängen, so daß die Eingabe auch "blind" erfolgen kann und somit für Blinde und Sehende gleichermaßen geeignet ist. Außerdem kann dadurch die Eingabegeschwindigkeit erhöht werden.

Nach einer weiteren vorteilhaften Ausgestaltung des Eingabeverfahrens ist die Tastenbelegung auf Eingaben mit der rechten oder linken Hand einstellbar, so daß man sogar während des Betriebes die Eingabehand wechseln kann und Rechts- oder Linkshänder gleichermaßen das erfindungsgemäße Verfahren bzw. die erfindungsgemäße Vorrichtung nutzen können.

Weitere Vorteile und vorteilhafte Ausgestaltungen sind der nachfolgenden Beschreibung, der Zeichnung und den Ansprüchen entnehmbar.

### Zeichnung

Ein Ausführungsbeispiel der Erfindung ist in der Zeichnung dargestellt und im folgenden näher beschrieben. Es zeigen:
- Fig. 1:: die wesentlichen mechanischen Komponenten der Vorrichtung,
- Fig. 2:: die Bewegungsarten von Schwenkplatte und Gehäuseträger,,
- Fig. 3:: eine Parallelführung für die Auf- und Abbewegung der langen Tasten,
- Fig. 4:: eine Anordnung zum Erfassen der Fingerspitzenposition auf den langen Tasten,
- Fig. 5:: eine Tastenbelegung für den Nummernshift,
- Fig. 6:: eine Tastenbelegung für den Buchstabenshift,
- Fig. 7:: eine optimierte Tastenbelegung für den Buchstabenshift und
- Fig. 8:: ein Verzeichnis der Kennworte für Sonderzeichen.

### Beschreibung des Ausführungsbeispiels

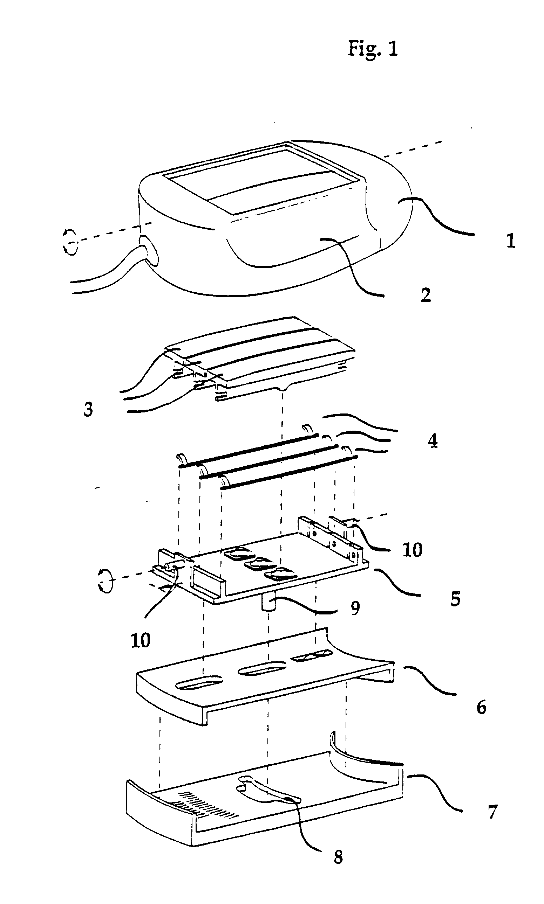

Fig. 1 ist eine Explosionszeichnung der Eingabevorrichtung. Die Vorrichtung hat ein Gehäuse 1 mit Auflagefläche 2 für den Daumen und für den kleinen Finger. Das Gehäuse 1 hat eine Aussparung für drei lange Tasten 3, die über Parallelführungen 4 mit einem Gehäuseträger 5 verbunden sind. Das Gehäuse ist in seiner Symmetrieebene auf zwei Achsen 10 des Gehäuseträgers 5 verdrehbar gelagert. Der Gehäuseträger 5 läßt sich auf einer Schwenkplatte 6 parallel zu den Achsen 10 zwischen zwei Raststellungen verschieben. Die Schwenkplatte 6 ist auf einer Bodenplatte 7 verschwenkbar gelagert. Die Schwenkachse verläuft dabei außerhalb des Gehäuses 1 senkrecht zur Bodenplatte 7 durch das Handgelenk des Benutzers. der Gehäuseträger 5 greift mit einem Stift 9 durch die Schwenkplatte 6 in eine Aussparung 8 der Bodenplatte 7 die den Schwenkwinkel begrenzt. Wie in der Zeichnung erkennbar, ist der freie Schwenkwinkel des Gehäuseträgers 5 in der rechten Raststellung größer als in der linken Raststellung.

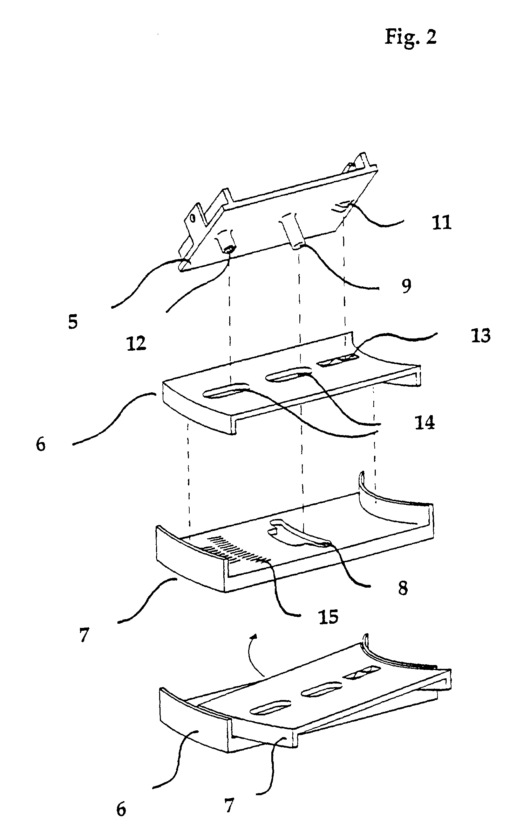

Fig. 2 zeigt in einer Explosionszeichnung die Unterseite des Gehäuseträgers 5. Man sieht die Parallelführung durch die beiden Stifte 9 und 12 in den beiden Langlöchern 14. Außerdem sieht man den Vorsprung 11 auf dem Gehäuseträger 5, der in eine der beiden Vertiefungen 13 in der Schwenkplatte 6 eingreift. Auf diese Weise werden - in Verbindung mit einer nicht dargestellten Feder - zwei stabile Rastlagen realisiert, zwischen denen man den Gehäuseträger verschieben und zurückziehen kann. Der Stift 12 auf dem Gehäuseträger 5 ist mit einem optischen System ausgestattet, das ein Strichlineal 15 auf der Bodenplatte 5 abtastet und in eine Winkelmessgröße umsetzt. Man sieht auch, daß in den beiden Raststellungen zwei verschiedenen Strichlineale wirksam sein können. Als haptische Rückmeldungen für die Bewegungen des Gehäuses dienen positionsabhängige Rückstellkräfte, die das Gehäuse in seine Grunstellungen ziehen. Ein besonderer Vorteil der Erfindung ist die Längsbewegung der Vorrichtung beim Umschalten der Betriebsarten. Die Rastlagen der Vorrichtung können auf die haptischen Rückmeldungen von anderen Bewegungen des Gehäuses einwirken, so daß man beim Bedienen spürt, welche Betriebsart momentan wirksam ist.

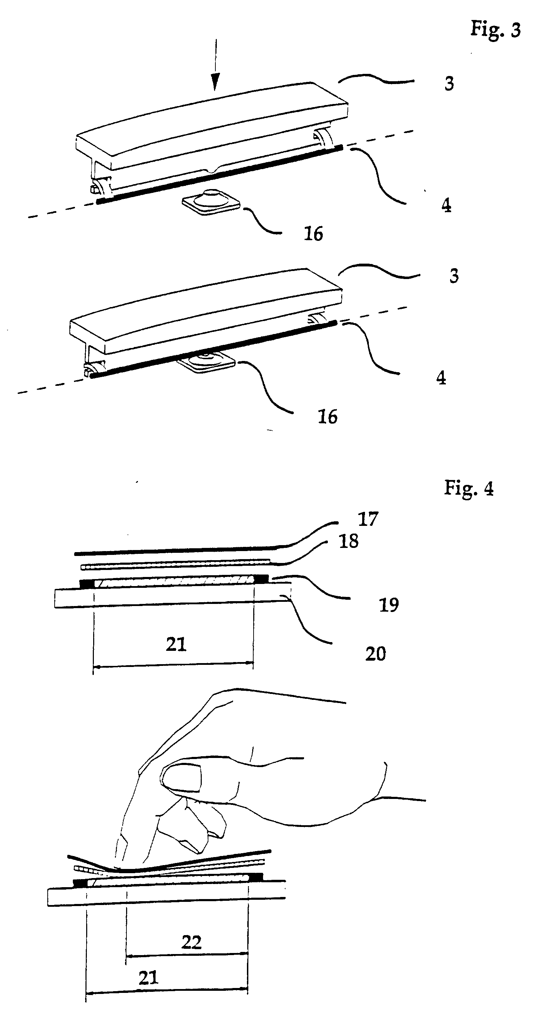

Fig. 3 zeigt eine Parallelführung für eine der langen Tasten 3. Eine drehsteife Welle, die im Gehäuseträger gelagert ist, greift mit zwei Hebeln in die Schlitze an den beiden Enden der Taste 3. Auf diese Weise betätigt man den Druckkontakt 16 unabhängig von der Stelle, an der man die Taste niederdrückt. Außerdem hat die Taste 3 eine gekrümmte Oberfläche. Dadurch spürt der Benutzer an welcher Stelle der Taste 3 sich gerade sein Finger befindet.

Fig. 4 zeigt eine Anordnung, mit der die Position der Fingerspitze auf eine langen Taste erfasst werden kann. Auf dem nichtleitenden Tastenkörper 20 einer Taste 3 liegt ein Streifen 19 aus Widerstandsmaterial (Lack oder Folie) der Länge 21, der mit seinen Enden an eine elektrische Spannung angeschlossen wird. Auf diesem Streifen leigt eine Kontaktfolie 18 aus einem drucksensitiven Wirkstoff, dessen Leitfähigkeit im drucklosen Zustand sehr gering ist und bei mechanischem Druck erheblich ansteigt. Über der Kontaktfolie 18 liegt eine Gleitfolie 17 mit eienr metallisierten Unterseite. Wenn ein Finger des Benutzers auf diese Anordnung drückt, wird die metallisierte Unterseite über die Kontaktfolie 18 an einer Stelle mit dem Widerstandsstreifen 19 leitend verbunden. Das auf die metallisierte Unterseite übertragene Spannungspotential ist ein Maß 22 für die Position der Druckstelle.

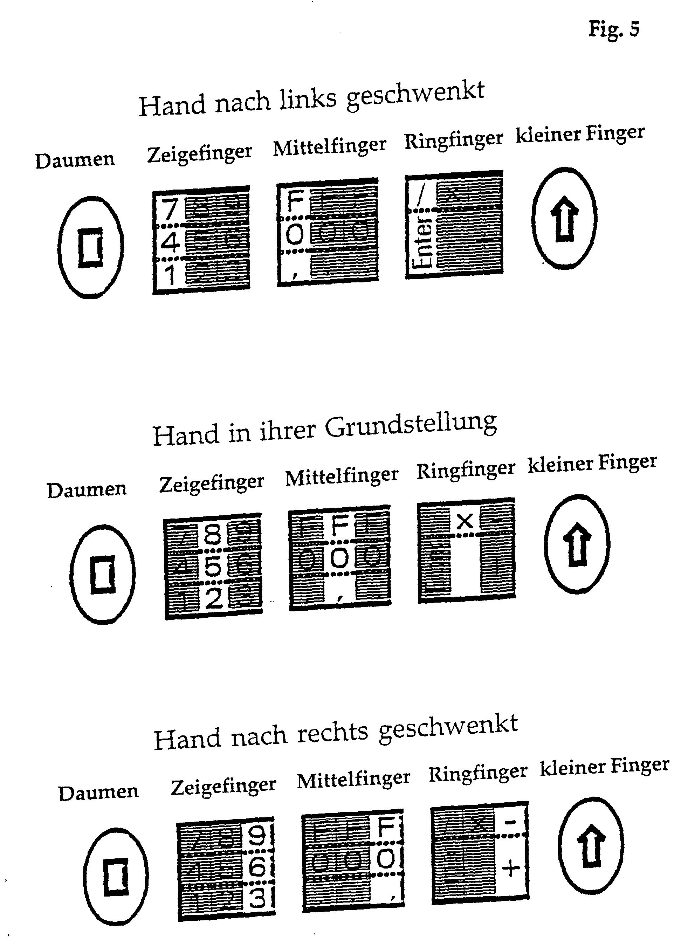

Fig. 5 zeigt eine Tastenbelegung für den Ziffernshift, bei der die Ziffern 1 bis 9 mit dem Zeigefinger eingegeben werden. Um eine "8" einzugeben, schwenkt man die Hand in ihre Grundstellung, streckt den Zeigefinger und betätigt die Zeigefinger-Taste an ihrem oberen Ende. Um eine "2" einzugeben, bleibt man mit der Hand in ihrer Grundstellung, krümmt den Zeigefinger und betätigt die Zeigefinger-Taste an ihrem unteren Ende. Eine "5" wird ebenfalls in der Grundstellung der Hand eingegeben, dazu betätigt man die Zeigefinger-Taste in ihrer Mitte. Mit den gleichen Bewegungen des Zeigefingers kann man die Ziffern "7" und "4" und "1" eingeben, wenn man die Hand vorher nach links schwenkt. Wenn man die Hand vorher nach rechts schwenkt, kann man mit den gleichen Bewegungen des Zeigefingers die Ziffern "9" und "6" und "3" eingeben. Bei der Tastenbelegung in Fig. 5 hat ein Betätigen des Mittelfingers in allen drei Handstellungen die gleiche Wirkung. Um eine "0" einzugeben, betätigt man die Mittelfingertaste in ihrer Mitte. Um ein Dezimalkomma einzugeben, betätigt man die Mittelfingertaste an ihrem unteren Ende. Die Tastenbelegung zeigt am oberen Ende der Mittelfingertaste ein "F", mit dem die Nummernfunktionen "F1", "F2", "F3" usw. eingeleitet werden. Um unbeabsichtigte Fehlbedienungen zu vermeiden, kann man für die Nummernfunktionen einen besonderen Bewegungsablauf vorsehen, der vom normalen Ablauf bei der Zifferneingabe abweicht. Man erreicht dies z.B. mit einem Doppelgriff. Man betätigt die Mittelfingertraste am oberen Ende und läßt die Taste gedrückt, während man mit dem Zeigefinger die Funktionsnummer eintastet. Daraufhin erscheint auf dem Bildschirm ein Hinweis auf die ausgewählte Funktion. Durch Betätigen des Daumens, der das Gehäuse nach einer Seite kippt, wird die ausgewählte Funktion gestartet.

Der Daumen und kleine Finger, die das Gehäuse aus seiner waagrechten Normallage nach links oder rechts kippen, haben vorzugsweise in allen Handstellungen (links - mitte -rechts) die gleiche Bedeutng. Der Daumen erzeugt z.B. einen Wortabstand (Leerschritt) oder startet eine Funktion (Enter), der kleine Finger bewirkt z.B. ein Shiftwechsel und schaltet mit einem Doppelklick zwischen Nummernshift und Buchstabenshift um.

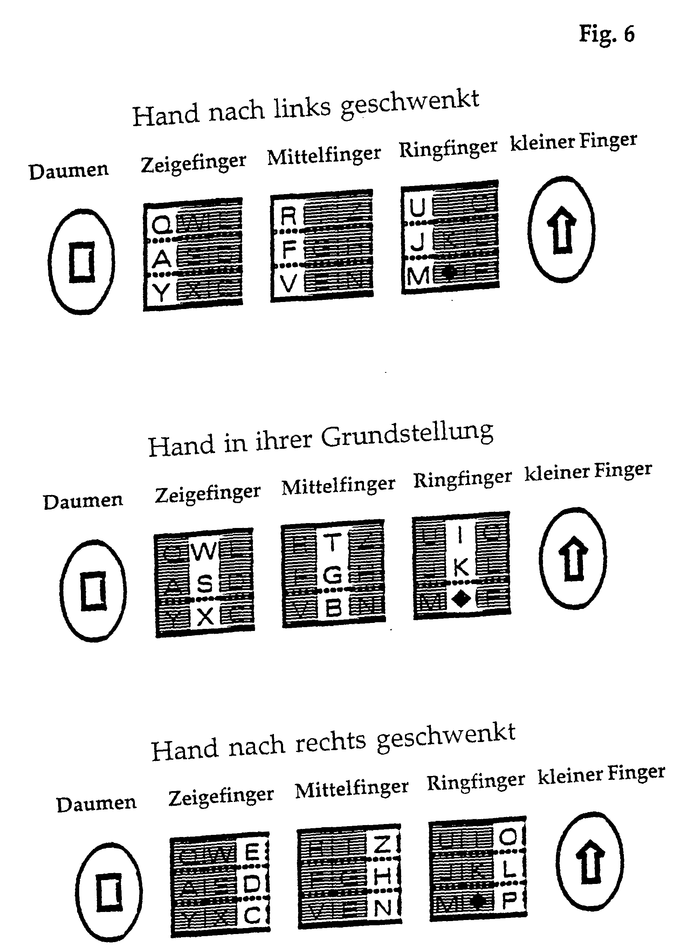

Fig. 6 zeigt eine Tastenbelegung für den Buchstabenshift. Jeder der drei Schreibfinger (Zeigefinger, Mittelfinger, Ringfinger) kann seine Tasten an drei Stellen (oben, in der Mitte oder unten) betätigen. Die Bedeutung dieser 3 x 3 = 9 Tastpunkte hängt außerdem von der Handstellung ab (nach links geschwenkt - Grundstellung - nach rechts geschwenkt). Mit den drei Handstellungen lassen sich also 3 x 9 = 27 Tastpunkte unterscheiden, die für das lateinische Alphabet ausreichen.
Man kann auch Tastenbelegungen programmieren, die weniger Tastpunkte oder mehr Tastpunkte haben. Wenn man auf einer Taste vier übereinanderliegende Tastpunkte unterscheidet und wenn man bei der Hand fünf Schwenkwinkel unterscheidet ergeben sich 3 x 4 x 5 = 60 verschiedene Tastpunkte. Solche Belegungen können für Sprachen mit umfangreichen Alphabeten praktisch sein.

Fig. 6 zeigt eine Tastenbelegung, die bei deutschen Tastaturen üblich ist. Diese Tastenbelegung ist für das neue Eingabeverfahren unzweckmäßig. Es ist ergonomisch besser, die Buchstaben so anzuordnen, daß die häufigsten Buchstaben vom Zeigefinger und vom Mittelfinger in der Grundstellung der Hand eingegeben werden. Außerdem ist es zweckmäßig, Buchstaben, die häufig aufeinanderfolgen, wie "e-n" oder "n-e" oder "e-s" oder "s-e" usw. auf einer Taste übereinander anzuordnen, damit diese Folgen sich mit den ergonomisch vorteilhaften Gleitbewegungen eingeben lassen.

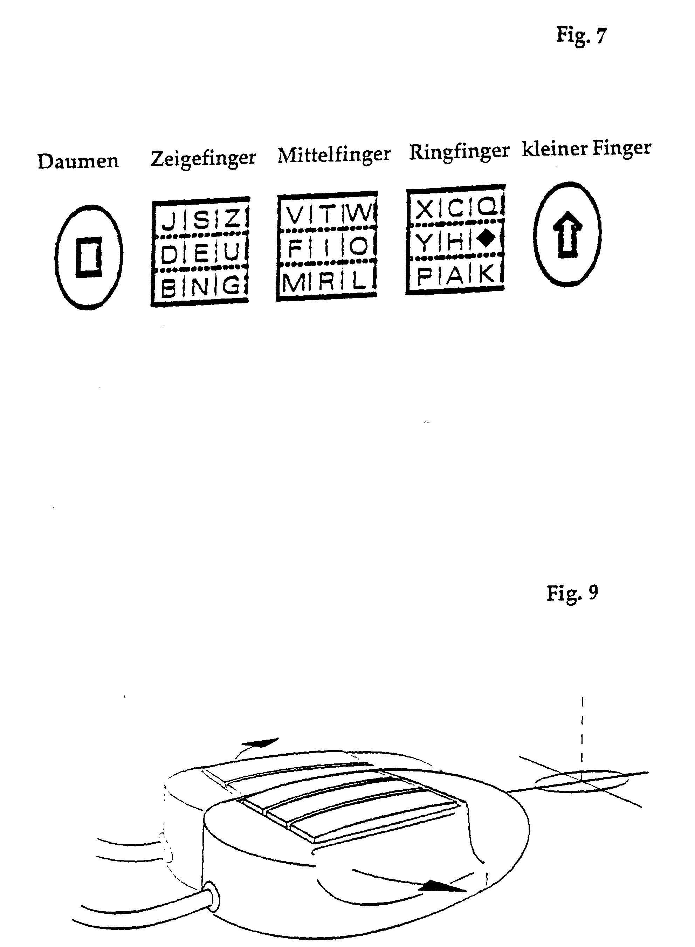

Fig. 7 zeigt eine für die Eingabe von deutschen Texten optimierte Tastenbelegung. Sie ergibt folgende Schritte für die Eingabebewegungen:
2/3 der Zeichen in der Grundstellung der Hand,
1/6 der Zeichen mit Schwenkbewegung nach links,
1/6 der Zeichen mit Schwenkbewegung nach rechts,
1/2 der Zeichen mit dem Zeigefinger,
1/3 der Zeichen mit dem Mittelfinger,
1/6 der Zeichen mit dem Ringfinger,
1/4 der Zeichenfolgen ermöglichen eine Gleitbewegung.

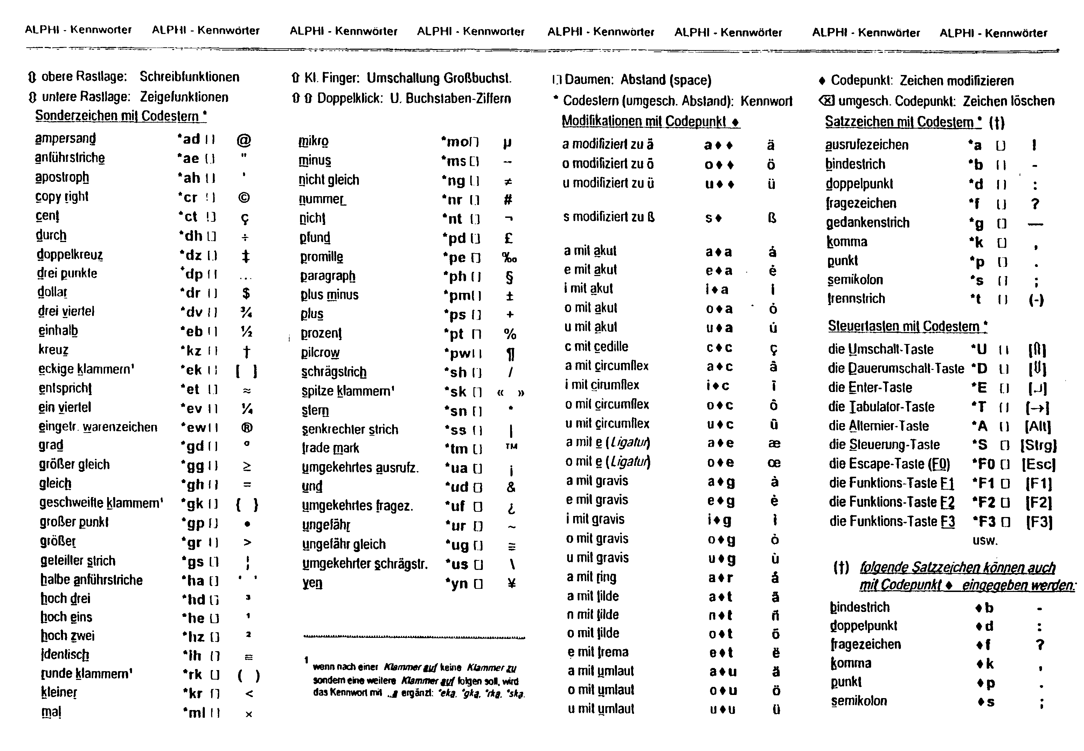

Fig. 8 zeigt eine Liste der Abkürzungen, mit denen Sonderzeichen wie "β", "$", "%" usw., diakritische Zeichen wie "á", "â", "ä" usw., Satzzeichen wie "!", "?", ";" usw. und Steuerbefehle wie "ENTER", "STRG", "ALT" usw. eingegeben werden können. Um mit professioneller Geschwindigkeit zu schreiben, muß man die Buchstaben eingeben, ohne auf einen Tastplan zu schauen. Die Lage der 26 Buchstaben auf einem Tastplan prägt sich relativ rasch ein. Bei den weit über hundert übrigen Zeichen ist dies schwierig, weil viele dieser Zeichen selten oder nie betätigt werden. Deshalb läßt man sich diese Zeichen auf dem Bildschirm anzeigen, sucht das gewünschte Zeichen mit einem Cursor heraus und klickt es an, um es in den Text einzufügen. Diese Eingabemethode ist umständlich und langsam. Bei dem neuen Eingabeverfahren ist für die nichtalphabetischen Zeichen eine andere Eingabemethode vorgesehen. Die meisten dieser Zeichen haben Eigennamen, z.B. hat das Zeichen "%" den Eigennamen "Prozent". Wenn man mit einem Codebefehl den Eigennamen eingibt und mit einem Abstand beendet, kann ein Programm den Eigennamen automatisch in das entsprechende Zeichen umsetzen. Bei diesem Vorgang kann der Eigenname abgekürzt werden. Dabei ist wichtig, daß man sich die Ankürzungen der Zeichen leicht merken kann. Dies erreicht man in der deutschen Sprache mit drei einfachen Abkürzregeln:
Wenn der Eigenname aus einem Wort besteht, bildet man die Abkürzungen aus dem Anfangsbuchstaben und dem Endbuchstaben z. B. bei "Prozent" die Abkürzung "pt".
Wenn der Eigenname aus zwei oder mehreren Wörtern besteht, bildet man die Abkürzung aus den Anfangsbuchstaben dieser Wörter, z. B. hat "geschweifte Klammer auf die Abkürzung "gka".
Einige häufiger vorkommende Zeichen können auch statt mit zwei oder mehr Buchstaben nur mit einem Buchstaben abgekürzt werden. Dieser Buchstabe ist der Anfangsbuchstabe des Eigennamens z.B. kann "Punkt" mit "p", und "Komma" mit "k", und "Fragezeichen" mit "f" abgekürzt werden.

Nach dem erfindungsgemäße Eingabeverfahren können die folgenden sechs Arten von Finger- und Handbewegungen als Relativbewegungen gegenüber der Grundplatte erfasst werden:

### Die ulnare Schwenkbewegung der Hand:

Die Drehachse dieser Schwenkbewegung steht senkrecht zur Auflagefläche und geht durch das Handgelenk. Der ulnare Schwenkwinkel wird als horizontale Koordinate erfasst. Die Auflösung dieser Koordinate entspricht der feinmotorischen Fähigkeit der Hand und unterscheidet z.B. 240 Winkelschritte in einem Schwenkbereich von 12 Grad nach links bis 12 Grad nach rechts.

### Die längsgerichtete Bewegung der Fingerspitzen:

Durch Beugen und Strecken eines Fingers kann seine Fingerspitze auf einer Gleitfläche einen Bereich in Längsrichtung des Fingers überstreichen. Die örtliche Position der Fingerspitze auf dieser Gleitfläche wird als vertikale Koordinate erfasst. Die Auflösung dieser Koordinate entspricht der feinmotorischen Fähigkeit der Fingergelenke und unterscheidet z.B. 160 Schritte auf einer Gleitfläche von 80 Millimeter Länge. Für diese Eingabeart werden vorzugsweise die drei besonders beweglichen Finger verwendet: Der Zeigefinger, der Mittelfinger und der Ringfinger.

### Das Niederdrücken und Loslassen der Fingerspitzen:

Jede Gleitfläche für die Erfassung der Fingerposition läßt sich unabhängig von benachbarten Gleitflächen niederdrücken und loslassen. Das Niederdrücken kennzeichnet die aktiven Positionssignale einer Fingerspitze. Wenn eine Taste niedergedrückt ist, wird fortlaufend die Position der Fingerspitze erfasst und ausgewertet. Das Loslassen kennzeichnet den informationslosen Ruhezustand, bei dem ein Finger passiv auf seiner Gleitfläche liegt. Wenn eine Taste losgelassen wird und der Finger drucklos auf ihrer Gleitflächläche liegt, ist die Position der Fingerspitze bedeutungslos. Die Gleitflächen der langen Tasten ermöglichen beim Eingeben einen Bewegungsablauf, der bei üblichen Einzeltasten nicht möglich ist. Wenn man zwei übereinanderliegende Einzeltasten nacheinander betätigen will, muß man den Finger auf der einen Taste niederdrücken, danach wieder anheben, danach zu der anderen Taste bewegen, und danach die andere Taste niederdrücken. Wenn man zwei übereinanderliegende Tastpunkte auf einer langen Taste nacheinander betätigen will, braucht man nur die Fingerspitze auf dem einen Tastpunkt niederzudrücken und danach mit der Fingerspitze auf der gedrückten Taste zum anderen Tastpunkt zu gleiten. Dieser Bewegungsablauf ist einfacher.

### Die Kippbewegung der Hand (Pronation):

Für Daumen und kleinen Finger sind Auflageflächen an der Eingabevorrichtung vorhanden, die sich um eine Achse in Längsrichtung des Unterarms drehen lassen. Der Drehwinkel dieser Auflageflächen soll vorzugsweise nur wenige Grad betragen und vorzugsweise nur drei Winkelstellungen unterscheiden:
a) Ein Steuersignal 1, bei dem die Auflagefläche für den Daumen niedergedrückt wird, wobei sich die Auflagefläche für den kleinen Finger anhebt,
b) ein Steuersignal 2, bei dem die Auflagefläche für den kleinen Finger niedergedrückt wird, wobei sich die die Auflagefläche für den Daumen anhebt, und
c) die waagerechte Grundstellung.
Die Drehbewegung um eine in der Mitte zwischen den Auflageflächen liegende Drehachse sorgt für einen Gewichtsausgleich. Das relativ große Gewicht der Hand kann deshalb gleichmäßig verteilt auf beiden Auflageflächen ruhen, ohne daß das Gewicht eine Auflagefläche unbeabsichtigt niederdrückt und dabei eine eine ungewollte Funktion auslöst.

### Die Längsbewegung der Hand:

Bei aufliegendem Unterarm läßt sich die Hand um wenige Millimeter in Richtung der Fingerspitzen vorschieben und oder in Richtung des Handgelenks zurückziehen. In dieser Bewegungsrichtung hat die Vorrichtung vorzugsweise zwei stabile Rastlagen zum Umschalten zwischen zwei Betriebsarten. Die eine Rastlage aktiviert die Zeigefunktionen (Mausbetrieb), die andere Rastlage aktiviert die Eingabe von alphanumerischen Zeichen (Tastaturbetrieb).

### Daumentasten:

Das Eingabeverfahren kann zusätzliche Tasten verwenden, die an die besondere Beweglichkeit des Daumens angepasst sind. Der Daumen kann z. B. eine odere mehrere Tasten bedienen, deren Tastflächen senkrecht zu seiner Auflagefläche stehen.

Das erfindungsgemäße Eingabeverfahren kann nicht nur an Bildschirmarbeitsplätzen eingesetzt, sondern auch für die Steuervorgänge von anderen Anwendungen verwendet werden, wie z. B. Hilfsmittel für Behinderte, Roboter, Simulatoren, Fernsteuerungen für Spielmodelle, Computerspiele.

Alle in der Beschreibung, in den Zeichnungen und in den Ansprüchen dargestellten Merkmale des Eingabeverfahrens können in den verschiedenen Anwendungen einzeln oder in beliebigen Kombinationen erfindungswesentlich sein.

## Patentansprüche

1. Eingabevorrichtung zur einhändigen Eingabe von Daten, nämlich von Koordinaten in einem mehrachsigen Koordinatensystem und von alphanumerischen Zeichen und Steuerbefehlen,
- mit einem an sich ortsfest auf einer Standfläche aufstellbaren Unterteil (Bodenplatte 7),
- mit einem oberhalb des Unterteils (7) angeordneten Gehäuse (1), welches in bezug auf das Unterteil (7) quer zur Richtung des Unterarmes des Benutzers bewegbar ist, wobei diese Bewegungen als Daten eingegeben werden,
- mit Tasten (3) zur Eingabe von Daten und
- mit einer Einrichtung (4 bis 6) oberhalb des Unterteils (7) zum Umsetzen der über Tasten (3) und Gehäuse (1) gegebenen Eingabebewegungen in elektrische Signalfolgen von entsprechenden Datenschnittstellen,
**dadurch gekennzeichnet,**
- **daß** die Querbewegung des Gehäuses (1) oberhalb des Unterteils (7) eine Schwenkbewegung um eine senkrecht zur Standfläche der Eingabevorrichtung stehende und durch das Handgelenk des Benutzers gehende Achse ist und
- **daß** mindestens eine Taste (3) **in Richtung des Unterarms des Benutzers** lang ausgebildet ist und einen Geber aufweist, welcher in Längsrichtung die Postion der Fingerspitze auf der Taste (3) mit einer feinen Auflösung als Koordinate erfaßt.

2. Eingabevorrichtung nach Anspruch 1, **dadurch gekennzeichnet, daß** das Gehäuse (1) auf dem Unterteil (7) in Richtung des Unterarms des Benutzers längs verschiebbar ist, wobei diese Längsbewegungen als Daten eingegeben werden.

3. Eingabevorrichtung nach Anspruch 1 oder 2, **dadurch gekennzeichnet, daß** die ulnare Schwenkbewegung der Hand mit einer feinen Auflösung als Koordinate erfolgt.

4. Eingabevorrichtung nach einem der vorhergehenden Ansprüche, **dadurch gekennzeichnet, daß** die Pronation durch den Verdrehwinkel bzw. Kippwinkel des Gehäuses erfaßt wird.

5. Eingabevorrichtung nach einem der vorhergehenden Ansprüche, **dadurch gekennzeichnet, daß** die Umsetzung der Eingabebewegungen mit einer von der Betriebsart abhängigen Auflösung erfolgt.

6. Eingabevorrichtung nach Anspruch 5, **dadurch gekennzeichnet, daß** die Auflösung bei der Umsetzung der Eingabesignale an die individuellen feinmotorischen Bewegungsamplituden der Hand angepasst wird.

7. Eingabevorrichtung nach einem der vorhergehenden Ansprüche, **dadurch gekennzeichnet, daß** die Umsetzung der Eingabesignale die Koordinatensignale von Zeigegeräten und die Kodesignale von Tastaturen erzeugt.

8. Eingabevorrichtung nach einem der vorhergehenden Ansprüche, **dadurch gekennzeichnet, daß** die Eingabevorrichtung symmetrisch aufgebaut ist und die Tastenbelegung auf das Bedienen mit der rechten Hand oder mit der linken Hand einstellbar ist.

9. Eingabevorrichtung nach einem der vorhergehenden Ansprüche, **dadurch gekennzeichnet, daß** beim Bewegen der Tasten (3) oder beim Bewegen des Gehäuses (1) haptische Rückmeldungen erfolgen, die von der momentanen Betriebsart und von der momentanen Tastenbelegung abhängen.

10. Verfahren zur einhändigen Eingabe von Daten mittels einer Eingabevorrichtung nach einem der vorherigen Ansprüche mit folgenden auch in unterschiedlicher Reihenfolge ausführbaren Verfahrensschritten:
a) Wahl von unterschiedlichen Tastenbelegungen für die Eingabe von Koordinaten, alphanumerischen Zeichen und Steuerbefehlen,
b) Erfassen der Tastenbetätigung,
**gekennzeichnet durch** folgende weitere Verfahrensschritte,
c) Erfassen der Position der Fingerspitzen auf langen Tasten (3) in bezug auf die Längsausdehnung der Tasten (3), wobei die Längsausdehnung in Längsrichtung des Unterarms des Benutzers verläuft,
d) Erfassen der Schwenkbewegung an der Eingabevorrichtung als ulnare Abduktion **durch** den Schwenkwinkel,
e) Verdrehen bzw. Kippen der Eingabevorrichtung als Pronation **durch** den Kippwinkel bzw. Verdrehwinkel,
f) Verschieben der Eingabevorrichtung und Erfassen dieser Translation **durch** die Verschiebestrecke.

11. Verfahren nach Anspruch 10, **dadurch gekennzeichnet, daß** die Umsetzung von den Tastpunkten des oder der Finger und von den Positionen der Eingabevorrichtung in entsprechende Signalfolgen mit änderbarer Rasterung erfolgt.

12. Verfahren nach einem der Ansprüche 10 oder 11, **dadurch gekennzeichnet, daß** beim Bewegen der Eingabevorrichtung haptische Rückmeldungen erfolgen, die von der momentanen Betriebsart und von der momentanen Tastenbelegung abhängen.

13. Verfahren nach einem der Ansprüche 10 bis 12, **dadurch gekennzeichnet, daß** die Tastenbelegung auf Eingaben mit der rechten oder mit der linken Hand einstellbar ist.

## Claims

1. A device for the one-handed input of data, i.e. the inputting of coordinates in a multiaxis coordinate system and of alphanumeric signs and control commands,
- with a base part (base plate 7) rigidly fixed to an erectable vertical surface,
- with a case (1) arranged above the base part, the said case being movable in the transverse direction to that of the user's forearm, such movements thereby being input as data,
- with keys (3) for data input and
- with a device (4 to 6) situated above the base part (7) for converting the input movements transmitted by means of keys (3) and case (1) to electrical signal sequences of corresponding data interfaces,
**characterised in that**
- the transverse movement of the case (1) above the base part (7) is a rotating movement around an axis vertical to the vertical surface of the input device and passing through the user's wrist and
- at least one key (3) is elongated **in the direction of the user's forearm** and has a transmitter that acquires the position of the user's fingertip in the longitudinal direction on the key (3) with fine resolution as the coordinate.

2. An input device in accordance with claim 1, **characterised in that** the case (1) is longitudinally displaceable in the direction of the user's forearm, whereby such longitudinal movements are input as data.

3. An input device in accordance with claim 1 or 2, **characterised in that** the ulnar rotating movement of the hand takes place with fine resolution as the coordinate.

4. An input device in accordance with one of the previous claims, **characterised in that** pronation is detected via the rotating or tilting angle of the case.

5. An input device in accordance with one of the previous claims, **characterised in that** conversion of the input movements takes place with a resolution dependent on the type of operation.

6. An input device in accordance with claim 5, **characterised in that** the resolution during conversion of the input signals is adjusted to the individual fine motor movement amplitudes of the hand.

7. An input device in accordance with one of the previous claims, **characterised in that** conversion of the input signals generates coordinate signals from indicator instruments and code signals from data entry keyboards.

8. An input device in accordance with one of the previous claims, **characterised in that** the input device is symmetrically constructed and the keyboard layout is adjustable for right-handed or left-handed operation.

9. An input device in accordance with one of the previous claims, **characterised in that** haptic feedbacks occur during movement of the keys (3) or movement of the case (1), the said feedbacks being dependent on the type of operation and the keyboard layout at the particular time.

10. A method for the one-handed input of data by means of an input device in accordance with one of the previous claims with the following method steps which can also be executed in a different order of sequence:
a) Selection of different keyboard layouts for the input of coordinates, alphanumeric signs and control commands,
b) Acquisition of key operation,
**characterised by** the further steps described below,
c) Acquisition of the position of the fingertips on elongated keys (3) with reference to the longitudinal extension of the keys (3), whereby the longitudinal extension runs in the longitudinal direction of the user's forearm,
d) Acquisition of the rotating movement on the input device as ulnar abduction due to the rotating angle,
e) Rotating or tilting of the input device as pronation due to the tilting angle or the rotating angle,
f) Displacement of the input device and acquisition of this translation by the displacement distance.

11. A method in accordance with claim 10, **characterised in that** transposition of the keying points of the finger or fingers and transposition of the positions of the input device is carried out in corresponding signal sequences with modifiable raster scanning.

12. A method in accordance with either of claims 10 or 11, **characterised in that** haptic feedbacks occur during movement of the input device, the said haptic feedbacks being dependent on the type of operation and the keyboard layout at the time.

13. A method in accordance with one of claims 10 to 12, **characterised in that** the keyboard layout is adjustable for left-handed or right-handed inputting.

## Revendications

1. Dispositif d'entrée de données à seule main, à savoir de coordonnées dans un système de coordonnées à plusieurs axes et de caractères alphanumériques et d'instructions de commande, équipé
- d'une partie inférieure (plaque de fond 7) pouvant être installée de façon fixe sur une assise,
- d'un boîtier (1) disposé au-dessus de la partie inférieure (7) qui peut être déplacé par rapport à la partie inférieure (7) transversalement à la direction du bras inférieur de l'utilisateur, ces mouvements étant entrés sous la forme de données,
- de touches (3) pour l'entrée de données et
- d'un dispositif (4 à 6) au-dessus de la partie inférieure (7) pour la conversion des mouvements d'entrée entrés par les touches (3) et le boîtier (1) en séquences de signaux électriques par des interfaces de données appropriés,
**caractérisé en ce que**
- le mouvement transversal du boîtier (1) au-dessus de la partie inférieure (7) est un mouvement de pivotement autour d'un axe perpendiculaire à l'assise du dispositif d'entrée et passant par le poignet de l'utilisateur et
- **en ce qu'**au moins une touche (3) est conçue en longueur **en direction de l'avant-bras de l'utilisateur** et présente un capteur qui enregistre dans le sens de la longueur la position de l'extrémité des doigts sur la touche (3) avec une fine résolution sous la forme de coordonnée.

2. Dispositif d'entrée selon la revendication 1, **caractérisé en ce que** le boîtier (1) peut être déplacé dans le sens de la longueur sur la partie inférieure (7) en direction de l'avant-bras de l'utilisateur, ces mouvements longitudinaux étant entrés sous la forme de données.

3. Dispositif d'entrée selon la revendication 1 ou 2, **caractérisé en ce que** le mouvement pivotant cubital de la main s'effectue avec une fine résolution sous la forme de coordonnée.

4. Dispositif d'entrée selon l'une quelconque des revendications précédentes, **caractérisé en ce que** la pronation est enregistrée par l'angle de rotation ou par l'angle de basculement du boîtier.

5. Dispositif d'entrée selon l'une quelconque des revendications précédentes, **caractérisé en ce que** la conversion des mouvements d'entrée s'effectue avec une résolution dépendante du mode de service.

6. Dispositif d'entrée selon la revendication 5, **caractérisé en ce que** la résolution lors de la conversion des signaux d'entrée est adaptée aux amplitudes de mouvement individuelles de motricité de précision de la main.

7. Dispositif d'entrée selon l'une quelconque des revendications précédentes, **caractérisé en ce que** la conversion des signaux d'entrée génère les signaux de coordonnées des appareils indicateurs et les signaux de code des claviers.

8. Dispositif d'entrée selon l'une quelconque des revendications précédentes, **caractérisé en ce que** le dispositif d'entrée est conçu de façon symétrique et que l'affectation des touches est adaptable à l'utilisation avec la main droite ou avec la main gauche.

9. Dispositif d'entrée selon l'une quelconque des revendications précédentes, **caractérisé en ce que**, lors du mouvement des touches (3) ou du mouvement du boîtier (1), on a des signaux de retour haptiques, qui dépendent du mode de service momentané et de l'affectation momentanée des touches.

10. Procédé pour introduire des données d'une seule main au moyen d'un dispositif d'entrée selon l'une quelconque des revendications précédentes avec les étapes de procédés suivantes également exécutables dans un ordre de succession différent :
a) choix de différentes affectations de touches pour l'entrée de coordonnées, caractères alphanumériques et instructions de commande,
b) enregistrement de l'actionnement des touches
**caractérisé par** les autres étapes de procédé suivantes,
c) enregistrement de la position des extrémités de doigts sur de longues touches (3) par rapport à la dimension longitudinale des touches (3), la dimension longitudinale allant dans le sens longitudinal de l'avant-bras de l'utilisateur,
d) enregistrement du mouvement de pivotement sur le dispositif d'entrée sous la forme d'abduction cubitale par l'angle de pivotement,
e) rotation ou basculement du dispositif d'entrée sous la forme de pronation par l'angle de basculement ou l'angle de rotation,
f) déplacement du dispositif d'entrée et enregistrement de cette translation par le chemin de déplacement.

11. Procédé selon la revendication 10, **caractérisé en ce que** la conversion des points de contact du doigt ou des doigts et des positions du dispositif d'entrée en séquences de signaux correspondants s'effectue avec un tramage modifiable.

12. Procédé selon la revendication 10 ou 11, **caractérisé en ce que**, lors du mouvement du dispositif d'entrée, on a des informations de retour tactiles qui dépendent du mode de service momentané et de l'affectation momentanée des touches.

13. Procédé selon l'une quelconque des revendications 10 à 12, **caractérisé en ce que** l'affectation des touches est adaptable aux entrées avec la main droite ou avec la main gauche.
